# EUROPEAN PATENT APPLICATION

(11) **EP 1 628 269 A2**
(43) Date of publication of application: **22.02.2006**
(21) Application number: 05076676.5
(22) Date of filing: 21.07.2005
(51) Int. Cl.: G07F 15/00, G07F 7/02, G07F 7/10

(54) **Improvements in or relating to prepayment facilities**

(30) Priority: 23.07.2004 GB 0416494
(71) Applicant: Landis+Gyr Limited, Stockport SK3 0RT (GB)
(72) Inventor: Jennings, Peter S., Wellington Telford TF1 3EX (GB)
(74) Representative: Humphrey-Evans, Edward John

(57) **Abstract**

The present invention relates to improvements in or relating to pre-payment facilities, and is more particularly, although not exclusively, concerned with pre-payment of utility meters. Pre-payment systems have existed in many forms for a number of years. Early card or ticket meters were non-meter specific and typically comprised pre-encoded multi-value tokens with magnetic strips. These were inherently insecure with a lack of encryption and did into provide any data for the utility companies. Later magnetic card meters improved upon security with basic encryption and meter-specific tokens being employed. Key meters were subsequently developed where a non-volatile circuit memory device was integrated in a plastic key. Tokens were re-usable but were expensive and sometimes susceptible to static electricity but they did provide two-way data transfer whereby utility companies could make reasonable statistical analysis of customer use habits. Smart cards, or so-called memory cards, have been employed which have a silicon chip embedded into a credit card style card. The present invention provides a pre-payment system comprising a commodity supply network, including a network of point-of-sale terminals, consumer commodity terminal operable to control a supply of the commodity, wherein the point-of-sale terminals and the commodity supply network are linked by a two-way communications link, and wherein the point-of-sale terminals and the consumer commodity terminals are operable to receive smart cards.

## Description

### Field of Invention

The present invention relates to improvements in or relating to pre-payment facilities, and more particularly, although not exclusively, relates to pre-payment utility meters.

### Background to the Invention

Pre-payment systems have existed in many forms for a number of years. At one end of the spectrum, season ticket holders for railway travel have a simple pre-payment system. There is the advantage for the traveller in that he does not have to queue every day to obtain a ticket; the railway operating company benefits from the reduced bureaucracy and headcount necessary to administer such a system. In another area, it is becoming increasingly common for utility companies to implement pre-payment systems in order to collect revenue when compared to conventional billing systems. Any non-pre-payment meter requires the honesty of the consumer and/or periodic readings to be taken by a utility appointed meter reader. Early methods of pre-payment relied upon the use of coins, which could be used in any meter. Nevertheless, theft of coins from collection boxes or meter-collectors was not uncommon, whilst the capital cost of the meter was high, required frequent servicing and no management information was available from a vending station, although meter readings, could of course be taken at the time of emptying the boxes.

Early card or ticket meters were non-meter specific and typically comprised pre-encoded multi-value tokens with magnetic strips. These were inherently insecure with a lack of encryption and did not provide any data for the utility companies. Later magnetic card meters improved upon security with basic encryption being employed. Key meters were subsequently developed where a non-volatile circuit memory device was integrated in a plastic key. Key tokens are re-usable but are expensive and sometimes susceptible to static electricity but they do provide two-way data transfer whereby utility companies could make reasonable statistical analysis of customer use habits. Such information is not only useful, for example, for determining which power generating stations to deploy, but could also be used in the directing of marketing of products, for example for sister companies of utility companies in the increasingly competitive deregulated markets.

A still further alternative has been the use of keypad metering whereby low cost meters such as utility meters provide predetermined amounts of a particular utility in response to the input of a code via a keypad. Whilst telephone, radio and internet connection is possible and it is secure, the system is frequently limited to one-way communication. Other technologies including the use of radio communications or power-line communications have yet to find broad application.

Latterly, smart cards, or so-called memory cards, have been employed which have a silicon chip embedded into a credit card style card. Smart cards have micro-processors that can provide increased levels of security. Additionally such a micro-processor can be used to run a program which is embedded within the card and can perform complex functions. Such complex functions may be used to provide increased security mechanisms or to transpose data held on the card. Although currently this functionality is available on smart cards it may in the future be available on other token devices also containing a micro-processor and memory and consequently for the purposes of this document the term smart card shall also apply to similar portable token devices. Certainly, smart cards have been able to pass the utility companies data other than cumulative consumption data.

Smart cards have been in use for some time with domestic pre-payment utility meters and although normally a smart card is only associated with one meter, current systems permit a customer's single card to be operable with multiple meters (one meter of each commodity).

There are a number of electronic purse schemes available whereby a monetary value may be stored upon a card, which monetary value can be used to credit a pre-payment device such as a utility meter. There has been proposed a system whereby commodity allowance units are determined, which are useable between different utilities and, indeed, different utility companies offering the same utility supply. It is believed that there has been no market acceptance of this idea, perhaps because of the introduction of an unknown quantity: an intermediate and variable value, commodity allowance unit.

The smart card thus has a number of issues to deal with in terms of facilities to be made available. The use of a smart card acting as a purse, however could become a double edged sword: the data relating to the provision of services, if held on a single smart card could provide data to one utility who chose to analyse data in a certain way whereby the integrity of the data as a whole is corrupted. If, for example, the pre-payment token has a means of exchanging securely protected information between the different pre-payment commodities, as may be desired and useful, the inclusion of a master security mechanism within the means of information exchange on the token may compromise the overall pre-payment system security. This master security mechanism would be common to all meters and tokens. By virtue of the master security mechanism being a common feature to all tokens and meters, if the mechanism is defeated, the whole system security would be compromised and fraudulent use of any or all tokens or meters may be made. The system as described is particularly exposed to attack by virtue of the master security mechanism being on the token.

### Object of the Invention

It is therefore an object of the present invention to provide a smart card pre-payment mechanism which obviates one or more of the above-mentioned disadvantages. In particular, the present invention seeks to overcome potential security breaches whereby data and/or data security mechanisms relating to one supplier-consumer series of transactions can become known to other parties.

### Statement of Invention

In accordance with a first aspect of the invention, there is provided a smart card operable for use in a multiple pre-payment commodity system, said multiple pre-payment commodity system including a number of commodity suppliers to provide commodities to a number of individual customer commodity terminals, wherein the smart card is programmable with a function operable to transpose encrypted data from any of a number of files held within any file structure within the card,
wherein the program of the function requires appropriate encryption keys to decrypt and to re-encrypt data to be transposed,
wherein encryption keys are associated with specific terminals operable with that card,
whereby to associate the use of a specific encryption key with specific terminals.

The encryption keys can be employed so as to associate the use of specific encryption keys with a specific customer commodity terminal, or specific point of sale terminals.

Since the same encrypted data security mechanism is not used between multiple customer commodity terminals or meters and point-of-sale units, the system would not be liable to fraudulent miss-use if the code specific to one meter and a card became known to others.

A personal identification number can be employed in addition to the transfer of information between a card and a point-of-sale unit, to further augment the security of data transfer.

Typically the consumer commodity terminal will comprise a utility meter such as an electricity meter, a water meter or a gas meter. The system could also be used in a heating system, for example as used in a communal building such as a block of flats.

In accordance with another aspect of the invention, there is provided a pre-payment system comprising a commodity supply network, including a network of point-of-sale terminals, consumer commodity terminals operable to control a supply of the commodity, wherein the point-of-sale terminals and the commodity supply network are linked by a communications link, and wherein the point-of-sale terminals and the consumer commodity terminals are operable to receive smart cards, which smart cards are programmable with a function operable to transpose encrypted data from any of a number of files held within any file structure within the card,
wherein the program of the function requires appropriate encryption keys to decrypt and to re-encrypt data to be transposed,
wherein encryption keys are associated with specific terminals operable with that card,
whereby to associate the use of a specific encryption key with specific terminals.

In accordance with another aspect of the invention, there is provided a point-of-sale terminal operable in a pre-payment system comprising a commodity supply network, including consumer commodity terminals operable to control a supply of the commodity, and wherein the consumer commodity terminals and the point-of-sale terminals are operable to receive a smart card; wherein the point-of-sale terminal is linked by a communications link to the commodity supply network; which smart cards are programmable with a function operable to transpose encrypted data from any of a number of files held within any file structure within the card, wherein the program of the function requires appropriate encryption keys to decrypt and to re-encrypt data to be transposed, wherein encryption keys are associated with specific terminals operable with that card, whereby to associate the use of a specific encryption key with specific terminals.

In accordance with a still further aspect of the invention, there is provided a consumer commodity terminal operable to control a supply of a commodity in a pre-payment system comprising a commodity supply network, including a network of point-of-sale terminals, wherein the point-of-sale terminals and the commodity supply network are linked by a two-way communications link, and wherein the point-of-sale terminals and the consumer commodity terminals are operable to receive smart cards; which smart cards are programmable with a function operable to transpose encrypted data from any of a number of files held within any file structure within the card, wherein the program of the function requires appropriate encryption keys to decrypt and to re-encrypt data to be transposed, wherein encryption keys are associated with specific terminals operable with that card, whereby to associate the use of a specific encryption key with specific terminals.

Such a consumer commodity terminal could comprise a utility meter, equipped with a card reader and means to transfer data relating to utility consumption.

In accordance with a still further aspect of the invention, there is provided a method of operating a pre-payment system comprising a commodity supply network, including a network of point-of-sale terminals and consumer commodity terminals, consumer commodity terminals operable to control a supply of the commodity, wherein the point-of-sale terminals and the commodity supply network are linked by a communications link, and wherein the point-of-sale terminals and the consumer commodity terminals are operable to receive smart cards, wherein there is a separate security mechanism associated with each consumer commodity terminal operable with that card, the method comprising the steps of: inserting the card in a terminal; transposing within the card data associated with the purchase of commodity, the transfer being enabled by exchange of encrypted terminal specific and card specific codes.

Typically a system will comprise many point-of-sale terminals. Information transferred between a particular card and a particular point-of-sale unit can conveniently be accessible by another point-of-sale unit within the same system. Of course, the person skilled in the art will realize that the terms "to transpose" and "transposition" are to be construed generally and it is intended to cover other complex functions of data manipulation.

### Brief Description of the Figures

For a better understanding of the present invention, reference will now be made, by way of example only, to the Figures as shown in the accompanying drawing sheets, wherein:-
Figure 1 illustrates one mechanism in which the pre-payment of utilities is possible;
Figure 2 illustrates a household having utility meters with a pre-payment facility; and,
Figure 3 represents a simplistic layout of a smart card made in accordance with the present invention.

### Detailed description of the Preferred Embodiments

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific

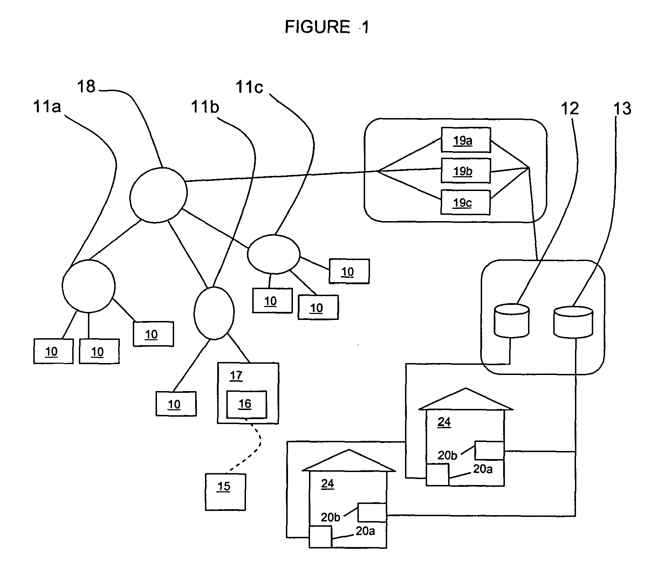

With reference to Figure 1 there is shown a number of point-of-sale units 10 which are shown associated with point of sale operators 11a, b, c, d, who enable the provision of a utility, for example, electricity 12 and/or gas 13 by way of bi-directional communication links (not referenced). A number of operators can be responsible for groups of point of sale machines. For example, in the United Kingdom, there is Post Office Counters Limited which has point of sale units located in numerous local branches of The Post Office; there are other types of point of sale operators, such as Paypoint and De La Rue, which operate via corner shops, supermarkets, petrol stations or the like. A consumer wishing to purchase electricity or another utility will present his smart card 15 into a correspondingly shaped orifice 16 in a user panel interface 17 of a point-of-sale unit. Placement of the card in the machine enables data to be read from the card. Depending upon the nature of the pre-payment scheme, certain identity features are read from the card. Security data, such as a personal identification number (PIN), may be input by the consumer whereby to ensure that the consumer is entitled to use the card and also to enable payment to be effected, although this is generally not implemented. Payment may be by electronic transfer or the point-of-sale unit may accept cash. The point of sale unit communicates via the operator to a network controller 18. The Central Quantum Office is one such network controller in the United Kingdom for gas. In turn, the Central Quantum Office communicates with service providers 19a, 19b, 19c, such as British Gas Trading, Southern Electric and other regional suppliers. In deregulated markets such as the United Kingdom the actual generator of the electricity or initial source of gas is not necessarily the service provider, but amounts of utility purchased from a particular service provider are communicated with the utility provider. From the utility supply, a consumer will receive, by way of cable or other conduit, a supply to be metered, by way of a meter, 20a, 20b at his premises 24.

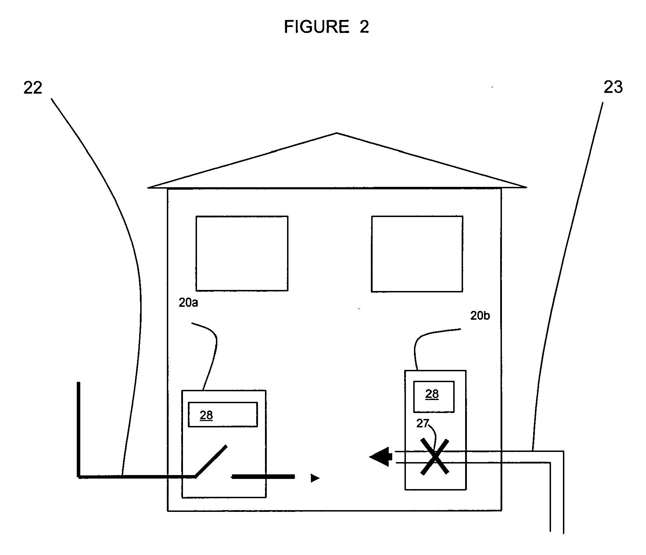

Referring now to Figure 2, there is shown a schematic representation of a consumer at home: his smart card may be insertable into any one of a number of utility meters or similar pay as you go equipment. An electricity meter 20a is connected to a mains supply 22 for supplying the consumer's premises 24. The meter 20 will include a switch 26 which can open when credit supply is exhausted. The meter 20 has a card reading unit 28 for receiving the smart card 15 and determining the amount of credit purchased, which depending upon the type of system, may be credited in full to the electricity meter or only a specified amount thereof is transferred and the remaining credit may be entered into one or more other smart card readers and associated equipment. Similarly, meter 20b is connected to mains gas supply 23 for supplying consumer's premises 24. A valve 27 is operable to cut-off the supply when a supply of credit has been exhausted.

Data can also be transferred to the card from the meter. Typically the smart card will receive details of consumption characteristics from the utility meter or other equipment. For example the knowledge of peak use times of consumption may be useful to an electrical utility to send correspondence relating to variable charging rates if taken at non-peak times. Equally such information may be used to target the consumer with particular types of timer and equipment. Thus it will be appreciated that significant amounts of data can be accumulated from a smart card.

A smart card, as it's name implies, is more than just a memory card. Although it contains an area of memory, the access to that memory is controlled by a micro-processor. If a device, such as a meter or point-of-sale terminal, needs to access data from the card it must communicate with the card's micro-processor. The card's memory area is divided into separate files which can also be established in separate folders and sub folders, if needed. There may be a single file structure or several file structures on the card. Individual files may be arranged to have some form of security, such as a user identity code or password, and this is controlled by the smart card's micro-processor. Thus if a meter or other type of device needs to read a file, such as an amount of purchased credit, then the device must first present the appropriate code to the card's micro-processor before it is allowed to read the file.

The aforementioned functionality comprises what is now well known smart card functionality. In the smart card electricity and gas products it is possible to have one card with file structures for both gas and electricity usage. As far as the individual meters are concerned, they can be programmed so that they do not take into account the fact that the card can be used for other meters of other commodities. The meter will simply access the appropriate file structure and process the transactions required. One aspect of such a scheme is that all this information will be available for all card readers and so there is potentially much information available to different utilities and other pay-as-you-go entities, including banks. It will be appreciated that any perceived advantages of smart cards could be offset by any potential miss-use of information, which is simply available by reading the cards.

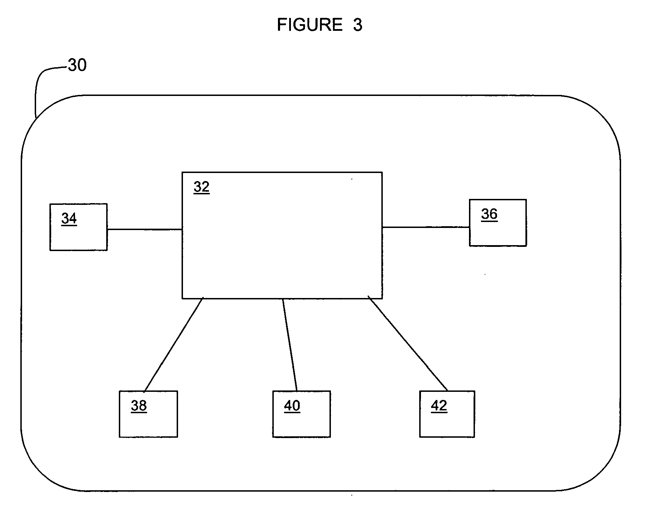

Referring now to Figure 3, there is shown a card 30 in accordance with the present invention. The card has a micro-processor 32, contacts 34, program memory 36, a security memory portion 38, and utility-specific memory portions 40, 42, respectively for e.g. gas and electricity. The respective utility-specific portions would include data relating to purchased credit, credit, tariff data, meter readings, debt data and other relevant data. These utility-meter specific portions contain data which may be encrypted by use of utility-meter specific keys. The card may be credited with a certain amount of credit. Upon subsequent use of the card with a specific meter, the meter would transfer the credit into the meter and verify the integrity of this credit by use of meter specific encryption checks. Whilst the card could be used for other meters, for other commodities, the use of a specific code per meter per utility per card means that the potential to defraud is minimised. Thus, even if security were to be compromised on a single card, then it would only be effective in relation to a single meter. It is believed that in view of the effort required, large scale fraud could not be envisaged.

Upon insertion of a card into a point of sale unit, the amount of money credited may be allocated to a single directory in relation to a first utility or may be allocated to first and second directories associated with first and second utilities. Where smart cards have multiple utility directories - which may be referred to as files or purses or memory areas, an amount of credit could be allocated initially in a first directory and then reallocated to a second utility directory by use of a programmed complex function contained and operable within the card which would itself have access to the meter specific encryption keys; if the smart card had a number of similar peer directories, then credit allocation ratios would be and provided to the programmed function. It is immaterial whether or not the encryption and decryption transpositions occur within a single file structure or within several file structures. Importantly a meter specific key held by the card would be used in all such transactions such that an allocation of utility could be tracked.

Thus the present invention takes advantage of the possibility in using smart cards so that there are hidden areas of the card's memory which are not accessible by the user of the card. These hidden areas can be used to contain a program to provide complex functions or to provide data for the use by such a program. The retention of encryption keys within these hidden areas may be necessary for the required functionality of the complex function program. Thus, the present invention provides a suitably secure system: by having each smart card customised with specific keys for each customer commodity terminal with which that card is to be used thereby restricting the risk of fraudulent use of the encryption keys to a single customer. The alternative, that of the inclusion of master system keys suitable for all possible customer commodity terminals or meters to which the card may be used would require large numbers of cards to have the master keys embedded within their hidden areas of memory, which could lead to of the security and viability of the entire system being compromised. A further level of security using user pass codes could also be employed.

It is possible that the smart cards can be used such that purchased credit for a first commodity could be split into a first amount of credit for a first commodity and a second amount of credit for a second commodity. This could involve the card's micro-processor running a program to read, for example, the credit employed to purchase gas and then to re-write a reduced credit value for gas and a new credit value for electricity in the appropriate purchased credit files. Nevertheless, this would require the provision of procedures to ensure that both purchase credit values are written to include secure checksums. If the secure checksum did not pass certain criterion, the purchased credit will not be accepted by the meter. The secure checksums could be derived from an encryption technique that would involve the use of encryption keys.

Although in the specific embodiments above have been described in relation to the data transfer between a smart card operating in relation to a consumer's utility meter, it will be appreciated that the same procedure is equally applicable to data transfer between a smart card in relation to a point of sale unit. Point of sale units are frequently installed in the premises of shops, independent or otherwise, where it may be desirable that the point of sale operator is not directly provided with the details of the security and encryption mechanism of the meters. By the use of a complex function operating within the smart card, the data may be transposed from a secure format compatible with the point of sale terminal into a secure format compatible with the meter. In this instance the complex function program would require access to the encryption key for a specific meter and the encryption key for a specific point of sale organization.

Notwithstanding the convenience of pre-payment mechanisms to operators, there is a social stigma associated with certain classes of people whereby pre-payment is simply not an option. Nevertheless, through the use of a meter-specific smart card, secure and enhanced functionality could prove to be advantageous to a consumer whereby the benefits - perceived or otherwise - would be greater than this perceived social stigma with pre-payment mechanisms.

## Claims

1. A smart card (30) operable for use in a multiple pre-payment commodity system, said multiple pre-payment commodity system including a number of commodity suppliers (19a,b, c) to provide commodities to a number of individual customer commodity terminals, wherein the smart card is programmable with a function operable to transpose encrypted data from any of a number of files held within any file structure within the card,
wherein the program of the function requires appropriate encryption keys to decrypt and to re-encrypt data to be transposed,
wherein encryption keys are associated with specific terminals (20, 28) operable with that card,
whereby to associate the use of a specific encryption key with specific terminals.

2. A smart card according to claim 1 wherein the encryption keys are associated with individual customer terminals, whereby to associate the use of specific encryption keys with a specific customer commodity terminal (20, 28).

3. A smart card according to claim 1 wherein the encryption keys are associated with specific point of sale terminals whereby to associate the use of specific encryption keys with specific point of sale terminals (10).

4. A smart card according to claims 1 - 3 wherein the multiple pre-payment commodity system includes a network of point-of-sale terminals (10) and wherein the system further comprises a code operated mechanism determined by an identification code unique to each consumer commodity terminal whereby communications between the card and respective consumer commodity terminal and point-of-sale terminal (10) relate to the amount of utility purchased and /or stored and / or used by that consumer commodity terminal and point-of-sale terminal (10).

5. A smart card according to any one of claims 4, wherein an identification number is employed in addition to the transfer of information between a card (15) and a point-of-sale unit (10).

6. A smart card according to any one of claims 1 - 5, wherein an identification number is employed in addition to the transfer of information between a card (15) and a consumer commodity terminal (20, 28)with which the card is associated.

7. A smart card according to any one of claims 1 - 6, wherein the consumer commodity terminal (20) comprises a utility meter.

8. A smart card according to any one of clams 1 - 7 wherein the card is operable to act as a monetary store and which is operable within a pre-payment system comprising a commodity supply network.

9. A pre-payment system comprising a commodity supply network, including a network of point-of-sale terminals (10), consumer commodity terminals (20) operable to control a supply of the commodity, wherein the point-of-sale terminals and the commodity supply network are linked by a communications link, and wherein the point-of-sale terminals and the consumer commodity terminals are operable to receive smart cards (15), which smart cards (15) are programmable with a function operable to transpose encrypted data from any of a number of files held within any file structure within the card,
wherein the program of the function requires appropriate encryption keys to decrypt and to re-encrypt data to be transposed,
wherein encryption keys are associated with specific terminals operable with that card,
whereby to associate the use of a specific encryption key with specific terminals.

10. A pre-payment system according to claim 9 wherein the encryption keys are associated with individual customer terminals, whereby to associate the use of specific encryption keys with a specific customer commodity terminal.

11. A pre-payment system according to claim 9 wherein the encryption keys are associated with specific point of sale terminals whereby to associate the use of specific encryption keys with specific point of sale terminals.

12. A system according to claim 9 wherein the system further comprises a code operated mechanism determined by an identification code unique to the consumer commodity terminal whereby communications between the card and respective consumer commodity terminal and point-of-sale terminal will relate to the amount of utility purchased and /or stored and / or used by that consumer commodity terminal and point-of-sale terminal.

13. A system according to any one of claims 9 - 12, wherein an identification number is employed in addition to the transfer of information between a card and a point-of-sale unit.

14. A system according to any one of claims 9 - 13, wherein an identification number is employed in addition to the transfer of information between a card and a consumer commodity terminal with which the card is associated.

15. A system according to any one of claims 8 - 12, wherein the consumer commodity terminal comprises a utility meter.

16. A point-of-sale terminal (10) operable in a pre-payment system comprising a commodity supply network, including consumer commodity terminals (20) operable to control a supply of the commodity, and wherein the consumer commodity terminals and the point-of-sale terminals are operable to receive a smart card (15); wherein the point-of-sale terminal (10) is linked by a communications link to the commodity supply network;
which smart cards are programmable with a function operable to transpose encrypted data from any of a number of files held within any file structure within the card,
wherein the program of the function requires appropriate encryption keys to decrypt and to re-encrypt data to be transposed,
wherein encryption keys are associated with specific terminals operable with that card,
whereby to associate the use of a specific encryption key with specific terminals.

17. A point-of-sale terminal (10) according to claim 16 wherein the encryption keys are associated with individual customer terminals, whereby to associate the use of specific encryption keys with a specific customer commodity terminal.

18. A point-of-sale terminal (10) according to claim 16 wherein the encryption keys are associated with specific point of sale terminals whereby to associate the use of specific encryption keys with specific point of sale terminals.

19. A point-of-sale terminal (10) according to claim 16 wherein there is a separate security mechanism associated with each consumer commodity terminal operable with that card,
wherein the point-of-sale terminal can transfer data from the card to the commodity supply network.
wherein there is provided a further security system comprising a code operated mechanism determined by an identification code unique to each consumer commodity terminal whereby communications between the card and respective consumer commodity terminal and a point-of-sale terminal will relate only to the amount of utility purchased and /or stored and / or used by that consumer commodity terminal and the point-of-sale terminal.

20. A consumer commodity terminal (20) operable to control a supply of a commodity in a pre-payment system comprising a commodity supply network, including a network of point-of-sale terminals, wherein the point-of-sale terminals and the commodity supply network are linked by a two-way communications link, and wherein the point-of-sale terminals and the consumer commodity terminals are operable to receive smart cards;
which smart cards are programmable with a function operable to transpose encrypted data from any of a number of files held within any file structure within the card,
wherein the program of the function requires appropriate encryption keys to decrypt and to re-encrypt data to be transposed,
wherein encryption keys are associated with specific terminals operable with that card,
whereby to associate the use of a specific encryption key with specific terminals.

21. A consumer commodity terminal (20) according to claim 20 wherein the encryption keys are associated with individual customer terminals, whereby to associate the use of specific encryption keys with a specific customer commodity terminal.

22. A consumer commodity terminal (20) according to claim 20 wherein the encryption keys are associated with specific point of sale terminals whereby to associate the use of specific encryption keys with specific point of sale terminals.

23. A consumer commodity terminal (20) according to claim 20 wherein there is a further provided a security mechanism comprising a code operated mechanism determined by an identification code unique to the consumer commodity terminal whereby communications between the card and respective consumer commodity terminal and point-of-sale terminal will relate only to the amount of utility purchased and /or stored and / or used by that consumer commodity terminal and point-of-sale terminal.

24. A method of operating a pre-payment system comprising a commodity supply network, including a network of point-of-sale terminals (10) and consumer commodity terminals (20),
wherein the consumer commodity terminals (20) are operable to control a supply of the commodity, wherein the point-of-sale terminals (10) and the commodity supply network are linked by a communications link, and wherein the point-of-sale terminals and the consumer commodity terminals are operable to receive smart cards,
wherein there is a separate security mechanism associated with each consumer commodity terminal operable with that card, the method comprising the steps of:
inserting the card in a terminal;
transposing within the card data associated with the purchase of commodity, the transfer being enabled by exchange of encrypted terminal specific and card specific codes.

25. A method according to claim 28 wherein the system further comprises a code operated mechanism determined by an identification code unique to the consumer commodity terminal whereby the step of transferring data between the card and respective consumer commodity terminal and point-of-sale terminal relates only to the amount of utility purchased and /or stored and / or used by that consumer commodity terminal and point-of-sale terminal.
